# FASCICULE DE BREVET EUROPEEN

(11) **EP 1 308 095 B1**
(45) Date de publication et mention de la délivrance du brevet: **10.12.2008**
(21) Numéro de dépôt: 02023843.2
(22) Date de dépôt: 24.10.2002
(51) Int. Cl.: A23K 1/18, A23K 1/00, A23K 1/14, A23K 1/17

(54) **Aliment pour poules pondeuses destiné à la production d'oeufs comestibles enrichis en iode et en acides gras polyinsaturés et procédé d'alimentation de poules pondeuses correspondant**
Futter für Legehennen zur Herstellung von mit N-3 polyungesättigten Fettsäuren und Jod angereicherten Eiern und Fütterungsverfahren
Feed for laying hens which produces eggs enriched in iodine and polyunsaturated fatty acids and corresponding feeding method

(30) Priorité: 31.10.2001 FR 0114214
(43) Date de publication de la demande: 07.05.2003
(73) Titulaire: Earl Moulin du Chatel, 29430 Plounevez Lochrist (FR)
(72) Inventeur: Autret, Michel, 29420 Mespaul (FR); Madec, Alain, 29490 Guipavas (FR)
(74) Mandataire: Poupon, Michel

(56) Documents cités:
- EP-A- 0 035 882
- WO-A-00/01399
- WO-A-01/45724
- WO-A-91/11117
- FR-A- 2 788 667
- NL-A- 8 303 660
- US-A- 4 338 304
- RICHTER G: "Untersuchungen zum Einsatz von Leinkuchen bei Legehennen" ARCHIV FUER GEFLUEGELKUNDE, VERLAG EUGEN ULMER GMBH, DE, vol. 62, no. 6, 1998, pages 264-272, XP002137085 ISSN: 0003-9098
- KAUFMANN, S., WOLFRAM, G., DELANGE, F., AND RAMBECK, W. A.: "Iodine supplementation of laying hen feed: A supplemetary measure to eliminate iodine deficiency in humans?" ZEITSCHRIFT FUER ERNAEHRUNGSWISSENSCHAFT., vol. 37, 1998, pages 288-293, XP002201768 STEINKOPF VERLAG, DARMSTADT., DE ISSN: 0044-264X
- DATABASE WPI Section Ch, Week 199622 Derwent Publications Ltd., London, GB; Class D13, AN 1996-219941 XP002201769 & KR 9 407 396 B (FURINA KOREA CO LTD), 18 août 1994 (1994-08-18)

## Description

La présente invention concerne un aliment pour poules pondeuses destiné à la production d'oeufs comestibles enrichis en iode et en acides gras polyinsaturés et le procédé d'alimentation de poules pondeuses.

On connaît déjà dans l'état de la technique antérieure notamment par le brevet EP-A- 0035 882 déposé par la société Nihon Nosan Kogyo l'obtention d'oeufs enrichis en iode, obtenus en ajoutant un additif à base d'algues riches en iode dans l'alimentation des poules pondeuses.

En outre de nombreuses études scientifiques ont été menées au Japon (*kaji et al*, *1984*) et aux Etats-Unis (*Garwin et al*, *1992*) et ont démontré plusieurs effets bénéfiques sur la santé des personnes souffrant de problèmes de fatigue et de surmenage, et mettant particulièrement en avant leurs aptitudes à réduire le taux de cholestérol.

Par ailleurs, on connaît également par la demande de brevet FR-A-2 788 667 déposée par la société Valorex S.A., la production d'oeufs enrichis en acides gras (n-3) polysinsaturés obtenus en introduisant dans l'alimentation des poules pondeuses, au moins en partie, des graines de lin extrudées afin de détoxifier les graines de lin présentant à l'état brut des agents cyanogènes relativement toxiques. Il a été en outre mis en évidence que les acides gras (n-3) polyinsaturés jouent un rôle important dans la réduction des maladies cardiaques, en aidant notamment à réduire les niveaux de triglycérides dans le sang. Ils ont une importance pour la croissance normale et le développement d'une bonne vision.

La consommation de tels oeufs ou de produits réalisés à partir de ces oeufs peut ainsi s'avérer bénéfique pour la santé de l'homme.

En outre, la production d'oeufs enrichis à la fois en iode et en acides gras (n-3) polyinsaturés pourrait trouver son intérêt, non encore validé scientifiquement, notamment pour leur consommation par des personnes sujettes à l'hypercholestérolémie, sans aucun risque pour leur santé.

Il s'avère cependant que l'élaboration d'un aliment pour la production d'un tel oeuf pose le problème d'une détérioration de la teneur en matière sèche des fientes des poules pondeuses liée à un déséquilibre des sels minéraux dans leur ration alimentaire du fait de l'incorporation du mélange d'algues.

Cette détérioration des fientes des poules pondeuses, se traduisant par des fientes molles pose dé nombreux problèmes notamment de manutention et de transport de celles-ci, des conditions d'hygiène des bâtiments de ponte et de la présentation inesthétique de ces oeufs à la vente.

De même on a proposé dans les documents WO 0145724 et WO 9111117 une source d'iode à partir d'algues destinées respectivement à augmenter les défenses immunitaires des volailles. Mais on ne prévoit pas l'utilisation d'iode dans l'alimentation des poules pour enrichir l'oeuf en iode. On ne résoud pas non plus le problème des fientes.

Le but de l'invention est de proposer un aliment permettant la production d'oeufs de consommation enrichis en iode et en acides gras polyinsaturés tout en résolvant par un rééquilibrage des sels minéraux de la ration, tout ou partie des inconvénients précités.

Ce but est atteint grâce à un aliment pour poules pondeuses permettant de produire des oeufs enrichis en iode et en acides gras (n-3) polyinsaturés constitué en majeure partie de céréales et de graines de lin extrudées, les graines de lin extrudées étant présentes entre 6 % et 8 % du poids total de la ration alimentaire caractérisé en ce qu'il comprend également, à raison de 2,5 % à 7 % du poids total de la ration, un mélange d'algues en teneur en iode d'au moins 1000 mg/kg, ledit mélange d'algues étant constitué en majeure partie d'Ascophylum nodosum mélangé à du laminaire.

Cette sélection de proportion de mélange d'algues en teneur en iode contrôlée permet selon l'invention de limiter dans la composition alimentaire l'apport supplémentaire en sel ( Na Cl ) par les algues par comparaison avec d'autres mélanges également utilisables mais à teneur en iode plus faible. Ceci permet ainsi dé palier au problème de fientes des poules pondeuses.

En outre, le mélange d'algues, avantageusement composé en majeure partie d'Ascophylum nodosum mélangé à du Laminaire, est de préférence réalisé dans des proportions respectivement de 75 à 85 % et de 15 à 25 % du poids total du mélange permettent ainsi d'améliorer la digestibilité de l'aliment pour l'animal en réduisant la présence de polyphénols dans ce dernier et de conserver ses propriétés colorantes du jaune d'oeuf ainsi produit.

Préférentiellement, un tel mélange d'algues est compris en proportion de 2,5 % du poids total de la ration afin d'obtenir sensiblement 350 µg d'iode par oeuf ainsi produit.

On notera qu'afin de permettre l'introduction du mélange d'algues à l'aliment, ce dernier subit un broyage et un tamisage spécifique pour réduire le mélange à l'état de granules sans "fines" où poussières ni particules trop grossières susceptibles d'être refusées par les poules de façon à s'assurer d'une consommationhomogèr e et non sélective. Ce mélange comprendra de façon préférentielle des particules comprises entre 0.1mm et 3 mm

De même, les grains de lin incorporés à aliment selon l'invention ont subi au préalable un traitement d'extrusion tel que décrit dans la demande de brevet FR 2 788 667, modifiant ainsi leurs propriétés physico-chimiques.

Un autre objet de la présente invention concerne un procédé d'alimentation de poules pondeuses, consistant à apporter une ration journalière d'un aliment selon l'une quelconque des caractéristiques ci-dessus comprises entre 100 g et 130 g.

Un autre objet de la présente invention concerne également un complément alimentaire destiné à être ajouté à un aliment classique pour poules pondeuses afin de produire des oeufs riches en iode et en acides gras (n-3) polyinsaturés, caractérisé en ce qu'il est constitué de graines de lin extrudées et d'un mélange d'algues en teneur en iode d'au moins 1000 mg/Kg, ledit mélange d'algues étant de préférence constitué en majeure partie d'Ascophylum nodosum mélangé à du laminaire Lessonia nigressens.

Les caractéristiques de l'invention mentionnées ci-dessus, ainsi que d'autres, apparaîtront plus clairement à la lecture de la description suivante d'un mode de réalisation, donné à titre purement illustratif et du graphique unique annexé.

Un aliment pour poules pondeuses selon l'invention a été réalisé et expérimenté en élevage. Cet aliment est composé principalement en proportions pondérales respectivement de :
- céréales (maïs, blé, orge) : 64 % du poids
- tourteau de soja : 17 % du poids
- graines de lin extrudées : 6 % du poids
- carbonate de calcium : 8 %
- C.M.V.(Complément Minéral et Vitaminique) : 2.5 %
- mélange d'algues en teneur en iode d'au moins 1000 mg/Kg : 2,5 % du poids.

Le mélange d'algues étant de préférence constitué de :
- 75 à 85 % d'Ascophylum nodosum, et
- 15 à 25 % de laminaires Lessonia nigressens.

Une telle sélection d'algues en teneur en iode d'au moins 1000 mg/kg permet avantageusement de palier au problème des fientes molles des poules pondeuses mais offre également un bon compromis économique pour la réalisation d'un tel aliment. En effet, un tel mélange d'algues permet de concentrer l'iode afin d'intégrer un minimum d'algues dans la composition alimentaire de manière à ce que les poules pondeuses n'aient respectivement aucune réticence à l'absorption de l'aliment et permet ainsi d'obtenir au final un oeuf présentant au moins 300 µg d'iode.

Cet aliment selon l'invention contient au moins 20 mg d'iode total par kilogramme et a été testé dans un élevage de poules pondeuses à raison d'une ration journalière comprise entre 100 g et 130 g par poule.

On peut observer sur le graphique 1, annexé, représentant l'évolution de la teneur en iode des oeufs d'une population de poules nourrie par un aliment selon l'invention, qu'au bout d'une quinzaine de jours les oeufs atteignent déjà une teneur de l'ordre 5 mg/kg brut et cette teneur se stabilise autour de 5,5 mg/kg par la suite. Cette teneur en iode de 5,5 mg/kg représente pour un oeuf de 60 g une teneur de l'ordre de 350 µg.

Après quinze jours de cette ration, correspondant à la période minimale d'initialisation, les caractéristiques des oeufs pondus par ces poules ont été comparées aux oeufs standards et résumées dans le tableau I ci-après.

**Tableau I**

| **Esters d'acide gras** | | **Oeufs après** | **Oeufs standards** |
|---|---|---|---|
| (en % relatif) | | **régime** | |
| Acide gras (n-6) | Acide linoléique C18 :2 | 16.70 | 16.25 |
| | Acide gamma-linoléique C18 :3 | 0.10 | 0.20 |
| | Acide eicosadiènoïque c20 :2 | 0.10 | 0 |
| | Acide arachidonique C20:4 | 1.30 | 1.70 |
| Acide gras (n-3) | Acide alpha-linoléique C18 : 3 | 4.20 | 0.70 |
| | Acide eicosatriènoïque C20 :3 | 0.10 | 0 |
| | Acide eicosapentanènoïque (EPA) C20 :5 | 0.10 | 0 |
| | Acide docosapentanènoïque (DPA) C22:5 | 0.30 | 0.10 |
| | Acide docosahexaènoïque (DHA) C22 :6 | 1.60 | 0.70 |
| BILANS | Total Acide gras oméga-3 | 6.40 | 1.50 |
| | Total Acide gras oméga-6 | 18.20 | 18.15 |
| | Rapport oméga-6/oméga-3 | ≈ 2.9 | ≈ 12 |
| | Acides gras saturés | 31.30 | 35.10 |
| BILANS | Acides gras mono-insaturés | 43.60 | 45.25 |
| | Acides gras poly-insaturés | 24.70 | 19.65 |
| | Cholestérols (%) | **0.25** | **0.48** |
| | Iode | **350 µg/oeuf** | **30 µg/oeuf** |
| | Vitamine E | 55.55 mg/kg | 23.0 mg/kg |
| | Vitamine A | 13.10 Ul/kg | 4.75 Ul/kg |

On constate au regard du tableau I que les oeufs obtenus à partir de l'aliment selon l'invention sont dix fois plus riches en iode et trois fois plus riches en acide gras (n-3) polyinsaturés que les oeufs standards

On notera également que l'oeuf selon invention a la particularité de contenir presque autant d'iode sur matière sèche dans son blanc que dans son jaune comme le montre le tableau II ci-dessous. En effet, la concentration en iode sur la matière sèche d'un jaune est par exemple de 31,7 mg / kg mais aussi de 23,0 mg / kg sur le blanc.

**TABLEAU II**

| **Analyse de** **l'iode** | **Oeuf entier** | | | **Jaune** | | | **Blanc** | | |
|---|---|---|---|---|---|---|---|---|---|
| | mg/kg | mg/kg de matière vsèche | Oeuf 60g avec coquille en µg | mg/kg | mg/kg de matière sèche | jaune d'un oeuf de (16.6g) en µg | mg/kg | mg/kg de matière sèche | blanc d'un oeuf de (39.7g) en µg |
| **Analyse laboratoire** | 5.0 | 20.0 | 300.0 | 13.8 | 26.5 | 229.8 | 1.8 | 16.3 | 70.2 |
| échantillon oeuf entier | | | | | | | | | |
| **Analyse laboratoire** | 2.8 | 11.2 | 166.5 | 8.0 | 15.4 | 132.8 | 0.85 | 7.7 | 33.7 |
| échantillon jaune et blanc (bruts) | | | | | | | | | |
| **Analyse laboratoire** | 6.2 | 24.8 | 373.1 | 16.5 | 31 7 | 273.9 | 2.5 | 23.0 | 99.2 |
| échantillon jaune et blanc en poudre | | | | | | | | | |

Cette particularité est fort intéressante pour la valorisation du blanc d'oeuf en ovoproduit enrichi en iode. En effet le fait d'enrichir le blanc d'oeuf riche en albumine en composés iodés est remarquable car il est connu, notamment par les publications du Dr Léger- Hôpital NECKER, que le transport plasmatique des hormones thyroïdiennes se fait principalement sous forme liée à des protéines telles que :
- la TBG (Thyroxin Binding Globulin)
- mais aussi la préalbumine ou TBPA (Thyroxin Binding PreAlbumine)
- et l'albumine elle-même.

Cette "particularité" des oeufs laisse augurer que l'iode sous forme organique des oeufs enrichis en iode est plus facilement assimilable et stockable que l'iode sous forme minérale de sel iodé, de sorte que la consommation d'un tel oeuf s'avère souhaitable pour l'homme.

De plus, cette spécificité permettrait d'extraire outre des composés lipoprotéinés iodés à partir du jaune (ou vitellus), des composés protéinés iodés à partir du blanc (ou albumen). Ces composés pourraient être très intéressants pour un usage thérapeutique, notamment dans les pathologies thyroïdiennes mais aussi dans les pathologies du cholestérol, du diabète et des maladies cardiovasculaires voir même cardiaque. En effet on peut imaginer que ces composés peuvent avoir un aspect intéressant en complément ou bien en combinaison avec certains médicaments contenant de l'iode organifié. Ces ovoproduits "iodo-protéinés" pourraient pour le moins servir de précurseurs pour la synthèse ou la fabrication de médicaments ou nutraceutiques préventifs ou curatifs.

En outre, on constate dans le tableau I que le rapport acide gras oméga-6 sur acide gras oméga-3 est trois fois moins élevé par rapport aux oeufs standards permettant ainsi de se rapprocher du régime crétois protégeant des maladies cardio-vasculaires.

Par ailleurs, les oeufs riches en iode et en acides gras polyinsaturés sont deux fois moins riches en cholestérol. De même, les oeufs du régime contiennent plus de vitamines, de deux à trois fois plus de vitamine E et de vitamine A que les oeufs standards.

On comprend à la lecture du mode de réalisation ci-dessus, que l'aliment selon l'invention permet la production d'oeufs dont la composition à été améliorée permettant d'augmenter l'apport de nutriments spécifiques, à visée préventive ou thérapeutique chez l'homme, sans les contraintes des changements d'habitudes alimentaires, pratiques non viables à long terme, et offre également des perspectives de consommation par des personnes présentant un taux élevé de graisse dans le sang ou traitées pour un diabète ayant généralement des régimes particuliers notamment sans sel et sans oeufs.

Cependant, il a été démontré qu'une telle ration alimentaire pour les poules pondeuses offrait un intérêt pour les animaux améliorant la ponte, conférant une plus grande résistance des poules aux parasites et aux maladies ainsi que chez les poussins qui naissent.

Par ailleurs, ces oeufs riches en iode et en acides gras polyinsaturés ont un intérêt pour le consommateur en lui offrant des vertus thérapeutiques préventives à moindre coût comme mentionné ci-dessus et ce, sous toutes les formes d'utilisations de tels oeufs et des ovoproduits en découlant.

Bien que l'invention ait été décrite en liaison avec un mode de réalisation particulier elle comprend tous les équivalents techniques des moyens décrits.

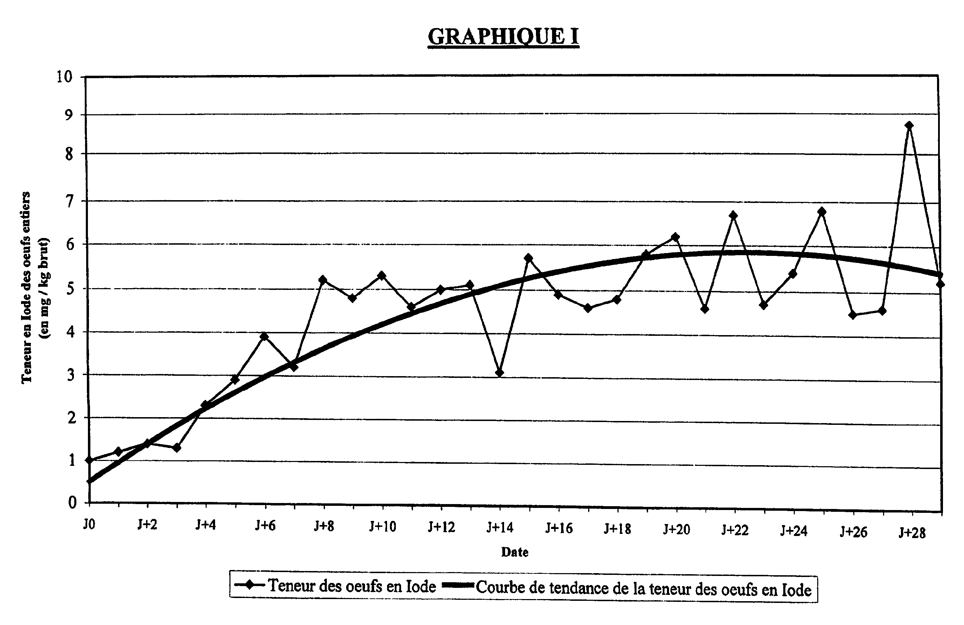

## Revendications

1. Aliment pour poules pondeuses destiné à la production d'oeufs comestibles enrichis en iode et en acides gras (n-3) polyinsaturés constitué en majeure partie de céréales et de graines de lin extrudées, les graines de lin extrudées étant présentes entre 6 % et 8% du poids total de la ration alimentaire **caractérisé en ce qu'**il comprend également, à raison de 2,5 % à 7 % du poids total de la ration, d'un mélange d'algues en teneur en iode d'au moins 1000 mg/Kg, ledit mélange d'algues étant constitué en majeure partie d'Ascophylum nodosum mélangé à du laminaire.

2. Aliment selon la revendication 1, **caractérisé en ce que** le mélange d'algues est constitué de 75 à 85% d'Ascophylum nodosum et de 15 à 25 % de laminaire Lessonia nigressens.

3. Aliment selon l'une quelconque des revendications précédentes, **caractérisé en ce qu'**il comprend 6 % du poids total de la ration de graines de lin extrudées et 2,5 % du poids total du mélange d'algues.

4. Complément alimentaire destiné à être ajouté à un aliment classique pour poules pondeuses, **caractérisé en ce qu'**il est constitué de graines de lin extrudées et d'un mélange d'algues en teneur en iode d'au moins 1000 mg/Kg, ledit mélange d'algues étant de préférence constitué en majeure partie d'Ascophylum nodosum mélangé à du laminaire Lessonia nigressens.

5. Procédé d'alimentation de poules pondeuses, **caractérisé en ce qu'**il consiste à apporter une ration journalière d'un aliment selon l'une quelconque des revendications 1 à 3 comprise entre 100 g et 130 g.

## Claims

1. Feed for laying hens intended for the production of edible eggs enriched with iodine and polyunsaturated fatty acids (n-3) consisting in the major part of cereals and extruded linseed, the extruded linseed being present between 6% and 8% of the total weight of the feed ration, **characterised in that** it also comprises, in the proportion of 2.5% to 7% of the total weight of the ration, an algae mixture with an iodine content of at least 1000 mg/kg, said algae mixture consisting in the major part of Ascophyllum nodosum mixed with kelp.

2. Feed according to Claim 1, **characterised in that** the algae mixture consists of 75% to 85% Ascophyllum nodosum and 15% to 25% of the kelp Lessonia nigrescens.

3. Feed according to any one of the preceding claims, **characterised in that** it comprises extruded linseed at 6% of the total weight of the ration and algae mixture at 2.5% of the total weight.

4. Feed supplement intended to be added to a conventional feed for laying hens, **characterised in that** it consists of extruded linseed and an algae mixture with an iodine content of at least 1000 mg/kg, said algae mixture preferably consisting in the major part of Ascophyllum nodosum mixed with the kelp Lessonia nigrescens.

5. Method of feeding laying hens, **characterised in that** it consists of providing a daily ration of a feed according to any one of Claims 1 to 3 of between 100 g and 130 g.

## Patentansprüche

1. Futter für Legehennen, das zum Herstellen essbarer Eier bestimmt ist, die mit Jod und N-3 polyungesättigten Fettsäuren angereichert sind, das zum größten Teil aus extrudierten Cerealien oder Flachskörnern besteht, wobei die extrudierten Flachskörner zwischen 6 und 8 % des Gesamtgewichts der Futterration ausmachen, **dadurch gekennzeichnet, dass** es auch zwischen 2,5 und 7 % des Gesamtgewichts der Ration ein Gemisch aus Algen mit einem Jodgehalt von mindestens 1000 mg/kg aufweist, wobei das Algengemisch zum größten Teil aus Ascophylum nodosum vermischt mit Fingertang besteht.

2. Futter nach Anspruch 1, **dadurch gekennzeichnet, dass** das Algengemisch aus 75 bis 85 % Ascophylum nodosum und 15 bis 25 % Fingertang Lessonia nigressens besteht.

3. Futter nach einem der vorhergehenden Ansprüche, **dadurch gekennzeichnet, dass** 6 % des Gesamtgewichts der Ration aus extrudierten Flachskörnern und 2,5 % des Gesamtgewichts aus Algengemisch bestehen.

4. Ergänzungsfutter zum Hinzufügen zu einem herkömmlichen Futter für Legehennen, **dadurch gekennzeichnet, dass** es aus extrudierten Flachskörnern und einem Algengemisch mit einem Jodgehalt von mindestens 1000 mg/kg besteht, wobei das Algengemisch vorzugsweise zum größten Teil aus Ascophylum nodosum vermischt mit Fingertang Lessonia nigressens besteht.

5. Fütterungsverfahren für Legehennen, **dadurch gekennzeichnet, dass** es darin besteht, eine Tagesration eines Futters nach einem der Ansprüche 1 bis 3 zu 100 g bis 130 g zu verabreichen.
